(19) Europäisches Patentamt / European Patent Office / Office européen des brevets

(11) **EP 3 208 673 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(51) Int Cl.:
**G05B 19/05** *(2006.01)* **B21B 37/16** *(2006.01)*
**B21B 31/08** *(2006.01)*

(21) Anmeldenummer: **16156732.6**

(22) Anmeldetag: **22.02.2016**

(54) **INLINE-KALIBRIERUNG DES WALZSPALTS EINES WALZGERÜSTS**

IN-LINE CALIBRATION OF THE ROLLER GAP OF A ROLLER STAND

ÉTALONNAGE EN LIGNE D'UNE EMPRISE DE LAMINAGE D'UNE CAGE DE LAMINOIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.08.2017 Patentblatt 2017/34**

(73) Patentinhaber: **Primetals Technologies Austria GmbH**
**4031 Linz (AT)**

(72) Erfinder:
• **Grüss, Ansgar**
**91007 Erlangen (DE)**
• **Linzer, Bernd**
**4621 Leombach (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
**EP-A1- 2 431 104    EP-A1- 2 620 233**
**FR-A1- 2 110 419    US-B1- 6 227 021**

**Beschreibung**

Die vorliegende Erfindung geht aus von einem Betriebsverfahren gemäß Patentanspruch 1.

Die vorliegende Erfindung geht weiterhin aus von einem Computerprogramm für eine Steuereinrichtung einer Walzstraße mit mehreren Walzgerüsten zum Walzen eines Metallbandes, wobei das Computerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung die Walzstraße gemäß einem derartigen Betriebsverfahren betreibt.

Die vorliegende Erfindung geht weiterhin aus von einer Steuereinrichtung einer Walzstraße mit mehreren Walzgerüsten zum Walzen eines Metallbandes, wobei die Steuereinrichtung derart ausgebildet ist, dass sie die Walzstraße gemäß einem derartigen Betriebsverfahren betreibt.

Die vorliegende Erfindung geht weiterhin aus von einer Walzstraße mit mehreren Walzgerüsten zum Walzen eines Metallbandes, wobei die Walzstraße von einer derartigen Steuereinrichtung gesteuert wird.

Ein Betriebsverfahren der eingangs genannten Art ist beispielsweise aus der FR 2 110 419 A1 oder der EP 2 431 104 A1 bekannt.

Die Walzen von Walzgerüsten verschleißen im Betrieb. Wenn die betroffenen Walzen ein kritisches Verschleißmaß erreicht haben, müssen die Walzen daher ausgetauscht werden. Besonders stark verschleißen die Arbeitswalzen der Walzgerüste, aufgrund der höheren Bandgeschwindigkeit insbesondere der hinteren Walzgerüste der Walzstraße.

Bei Kaltwalzwerken wird zum Austausch der Walzen die Walzstraße angehalten. Der Austausch ist daher problemlos möglich. Bei üblichen Warmwalzwerken können die Brammen in einem Ofen zwischengespeichert werden. Während der Zwischenspeicherung kann der Walzenwechsel durchgeführt werden. Der Austausch ist auch hier problemlos möglich.

Bei einer Endlos-Gieß-Walz-Verbundanlage wie beispielsweise einer ESP-Anlage wird der gegossene Metallstrang innerhalb einer Gießsequenz kontinuierlich angeliefert. Eine Zwischenspeicherung ist nicht möglich. Zum Wechseln von verschlissenen Walzen müsste daher die Stranggießmaschine abgestellt werden und die Walzstraße leergefahren werden. Nach dem Wechseln der Walzen müsste die Gieß-Walz-Verbundanlage erneut gestartet und bis zum stationären Betrieb hochgefahren werden. Diese Vorgehensweise würde jedoch zu einer deutlichen Verringerung der Gesamtproduktivität der Anlage führen. Alternativ ist es möglich, die produzierten Brammen zwischen einer ersten Walzstraße und einer der ersten Walzstraße nachgeordneten zweiten Walzstraße auszuschleusen und dadurch die zweite Walzstraße aus der Produktion zu nehmen. In diesem Fall kann innerhalb der zweiten Walzstraße der Walzenwechsel vorgenommen werden. Der produzierte Metallstrang kann in diesem Fall jedoch nicht mehr auf das Endmaß eines dünnen Breitbandes gewalzt werden.

Aufgrund des Umstands, dass die Arbeitswalzen vor allem der hinteren Walzgerüste besonders stark verschleißen, müssen die Arbeitswalzen der hinteren Walzgerüste öfter gewechselt werden als die Arbeitswalzen der vorderen Walzgerüste. Dennoch muss im Stand der Technik die gesamte Walzstraße stillgelegt werden, obwohl nur die Arbeitswalzen eines einzigen Walzgerüsts gewechselt werden müssen. Durch die damit verbundene Häufigkeit der Anlagenstillstände sinkt die Produktivität der Gesamtanlage.

Aus der WO 2011/124 585 A1 ist ein Verfahren zum Wechseln von Arbeitswalzen in Gießwalzanlagen und Warmbandstraßen bekannt, bei dem der Wechsel der Arbeitswalzen fliegend erfolgt, d.h. während des Walzens, also bei laufendem Band. Bei diesem Verfahren wird auf das Metallband vor und/oder nach dem Eintreten in das sich im Kalibrierbetrieb befindende Walzgerüst über mindestens eine in die Walzlinie einführbare Niederhalterolle ein Bandzug aufgebracht.

Aus der WO 2004/004 938 A1 ist bekannt, einen von einer Stranggießmaschine gegossenen Metallstrang in vorbestimmte Längen zu teilen und die einzelnen Längen zu walzen. Soll ein Walzenwechsel durchgeführt werden, wird die Gießgeschwindigkeit der Stranggießanlage verringert, damit für den Wechsel der Walzen der Walzstraße ein größeres Zeitfenster zur Verfügung steht.

Aus der JP S59 070 412 A ist bekannt, vor und hinter einem Walzgerüst Treiber vorzusehen. Die Treiber werden aktiviert, wenn die Arbeitswalzen des Walzgerüsts gewechselt werden sollen. Sie dienen der Beaufschlagung des Metallbandes zum vorgeordneten und nachgeordneten Walzgerüst hin mit einem definierten Bandzug.

Aus der US 2011/0 099 783 A1 ist bekannt, eine Walzstraße mit einem Walzgerüst mehr als eigentlich benötigt auszustatten. Das zusätzliche Walzgerüst ist normalerweise inaktiv, d.h. es walzt das Metallband nicht. Sollen bei einem aktiven (d.h. das Metallband walzenden) Walzgerüst die Arbeitswalzen gewechselt werden, wird das zusätzliche Walzgerüst aktiviert und übernimmt von einem seiner benachbarten Walzgerüste dessen Funktion. Das benachbarte Walzgerüst übernimmt wiederum von seinem benachbarten Walzgerüst dessen Funktion usw., bis das Walzgerüst erreicht ist, dessen Arbeitswalzen gewechselt werden sollen. Dieses Walzgerüst ist nun inaktiv. Seine Arbeitswalzen können daher gewechselt werden. Nach dem Wechseln der Arbeitswalzen wird der Vorgang in umgekehrter Reihenfolge ausgeführt und dadurch das Walzgerüst, dessen Arbeitswalzen gewechselt wurden, wieder aktiviert.

Nach dem Wechseln der Walzen des Walzgerüsts muss das Walzgerüst neu kalibriert werden. Wenn sich zum Zeitpunkt der Kalibrierung zwischen den Arbeitswalzen des Walzgerüsts kein Metallband befindet, ist die Kalibrierung problemlos möglich. In diesem Fall wird zur Kalibrierung der Walzspalt mittels des Stellgliedes - in der Regel einer Hydraulikzylindereinheit - walzkraftgeregelt geschlossen, bis eine definierte Walzkraft erreicht ist. Anhand der dann gegebenen Stellgliedposition wird sodann in Verbindung mit den weiteren Zustandsparametern des Walzgerüsts der Kalibrierwert des Walzgerüsts ermittelt. Der ermittelte Kalibrierwert wird gespeichert. Im späteren Normalbetrieb wird dann zum Ermitteln der einzustellenden Stellgliedposition als Kalibrierwert des Walzgerüsts der im Kalibrierbetrieb ermittelte Kalibrierwert herangezogen.

Bei einem fliegenden Wechsel der Arbeitswalzen, also bei einem Wechsel der Arbeitswalzen während des laufenden Walzbetriebs, ist diese Vorgehensweise nicht möglich. Es muss daher eine andere Möglichkeit zur Kalibrierung des Walzgerüsts gefunden werden.

Die Aufgabe der vorliegenden Erfindung besteht darin, Möglichkeiten zur Kalibrierung des Walzgerüsts anzugeben, obwohl das zu kalibrierende Walzgerüst mit Walzgut belegt ist, sich also im Walzspalt des Walzgerüsts Metallband befindet.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 8.

Erfindungsgemäß wird ein Betriebsverfahren der eingangs genannten Art dadurch ausgestaltet,

- dass im Kalibrierbetrieb die Stellgliedposition zunächst derart eingestellt ist, dass das Metallband das Walzgerüst durchläuft, ohne von den Arbeitswalzen gewalzt zu werden,
- dass sodann im Kalibrierbetrieb die Stellgliedposition variiert wird, so dass die Arbeitswalzen das Metallband walzen,
- dass im Kalibrierbetrieb mittels einer dem jeweiligen Walzgerüst nachgeordneten Dickenmesseinrichtung eine Dicke des Metallbandes erfasst wird, mit der das Metallband aus dem jeweiligen Walzgerüst ausläuft, und
- dass die Dicke, die weiteren Zustandsparameter und die Stellgliedposition dem Modell zugeführt werden und das Modell anhand der Dicke, der weiteren Zustandsparameter und der Stellgliedposition den Kalibrierwert des jeweiligen Walzgerüsts ermittelt.

In der Regel befinden sich zwischen den einzelnen Walzgerüsten der Walzstraße keine Dickenmesseinrichtungen. Eine Dickenmesseinrichtung ist vielmehr lediglich hinter dem letzten Walzgerüst der Walzstraße angeordnet. Zur Implementierung der erfindungsgemäßen Vorgehensweise ist es daher erforderlich, dass zwischen dem jeweiligen Walzgerüst und der Dickenmesseinrichtung entweder kein weiteres Walzgerüst angeordnet ist oder dass zwischen dem jeweiligen Walzgerüst und der Dickenmesseinrichtung zwar mindestens ein weiteres Walzgerüst angeordnet ist, während des Kalibrierbetriebs des jeweiligen Walzgerüsts jedoch bei allen weiteren Walzgerüsten die jeweilige Stellgliedposition derart eingestellt ist, dass das Metallband das jeweilige weitere Walzgerüst durchläuft, ohne von Arbeitswalzen des jeweiligen weiteren Walzgerüsts gewalzt zu werden.

Vorzugsweise weist die Walzstraße einen Treiber auf, der dem jeweiligen Walzgerüst nachgeordnet ist. Der Treiber beaufschlagt in diesem Fall das Metallband im Kalibrierbetrieb des jeweiligen Walzgerüsts auslaufseitig des jeweiligen Walzgerüsts mit einem definierten Zug. Der Treiber beaufschlagt das Metallband jedoch lediglich mit dem Zug. Er führt keine plastische Umformung des Metallbandes durch. Die Dicke des Metallbandes hinter dem Treiber ist also gleich der Dicke des Metallbandes vor dem Treiber.

Es ist möglich, dass der Treiber dem jeweiligen Walzgerüst unmittelbar nachgeordnet ist, dass sich also zwischen dem jeweiligen Walzgerüst und dem Treiber keine anderen Walzgerüste oder andere Treiber befinden. Alternativ ist es möglich, dass sich zwischen dem jeweiligen Walzgerüst und dem Treiber andere Walzgerüste befinden. Insbesondere kann der Treiber hinter dem letzten Walzgerüst der Walzstraße angeordnet sein. In diesem Fall ist bei den anderen Walzgerüsten jedoch die jeweilige Stellgliedposition derart eingestellt, dass das Metallband das jeweilige weitere Walzgerüst durchläuft, ohne von Arbeitswalzen des jeweiligen weiteren Walzgerüsts gewalzt zu werden.

In der Regel weist die Walzstraße einen dem jeweiligen Walzgerüst vorgeordneten-Schlingenheber auf. Der dem jeweiligen Walzgerüst vorgeordnete Schlingenheber wird im Kalibrierbetrieb in einer definierten Höhenlage gehalten. Dadurch wird vermieden, dass das Metallband während des Walzenwechsels die Arbeitswalzen des jeweiligen Walzgerüsts berührt.

Falls es sich bei dem jeweiligen Walzgerüst nicht um das letzte Walzgerüst der Walzstraße handelt, weist die Walzstraße in der Regel auch einen dem jeweiligen Walzgerüst nachgeordneten Schlingenheber auf. In diesem Fall wird der nachgeordnete Schlingenheber - analog zum vorgeordneten Schlingenheber - im Kalibrierbetrieb in einer definierten Höhenlage gehalten.

In der Regel ist dem jeweiligen Walzgerüst mindestens ein anderes Walzgerüst vorgeordnet. In diesem Fall bleibt vorzugsweise ein Stichplan, gemäß dem die anderen Walzgerüste betrieben werden, beginnend mit dem Zeitpunkt, zu dem mit dem Variieren der Stellgliedposition des Stellgliedes des jeweiligen Walzgerüsts begonnen wird, bis zu dem Zeitpunkt, zu dem bezüglich des jeweiligen Walzgerüsts vom Kalibrierbetrieb in den Normalbetrieb übergegangen wird, unverändert. Dadurch kann während des Kalibrierens des jeweiligen Walzgerüsts insbesondere einlaufseitig des jeweiligen Walzgerüsts stabil eine Dicke des Metallbandes nahezu konstant gehalten werden.

Nach dem Zeitpunkt, zu dem bezüglich des jeweiligen Walzgerüsts vom Kalibrierbetrieb in den Normalbetrieb übergegangen wird, ist es möglich, dass ein Stichplan, gemäß dem das jeweilige Walzgerüst und die anderen (d.h. die vorgeordneten) Walzgerüste betrieben werden, geändert wird. Dadurch kann insbesondere eine Lastverteilung zwischen den einzelnen Walzgerüsten optimiert werden.

Die Aufgabe wird weiterhin durch ein Computerprogramm mit den Merkmalen des Anspruchs 9 gelöst. Erfindungsgemäß wird ein Computerprogramm der eingangs genannten Art dadurch ausgestaltet, dass die Abarbeitung des Computerprogramms durch die Steuereinrichtung bewirkt, dass die Steuereinrichtung die Walzstraße gemäß einem erfindungsgemäßen Betriebsverfahren betreibt.

Die Aufgabe wird weiterhin durch eine Steuereinrichtung mit den Merkmalen des Anspruchs 10 gelöst. Erfindungsgemäß ist die Steuereinrichtung derart ausgebildet, dass sie die Walzstraße gemäß einem erfindungsgemäßen Betriebsverfahren betreibt.

Die Aufgabe wird weiterhin durch eine Walzstraße mit den Merkmalen des Anspruchs 11 gelöst. Erfindungsgemäß wird eine Walzstraße der eingangs genannten Art dadurch ausgestaltet, dass die Walzstraße von einer erfindungsgemäßen Steuereinrichtung gesteuert wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1        eine Walzstraße mit mehreren Walzgerüsten,
FIG 2        einen Normalbetrieb der Walzgerüste der Walzstraße,
FIG 3        die Wirkungsweise eines Modells,
FIG 4 bis 6    eine Abfolge von Zuständen der Walzstraße in einem Kalibrierbetrieb des letzten Walzgerüsts der Walzstraße,
FIG 7        die inverse Wirkungsweise des Modells von FIG 3 und
FIG 8 bis 10    eine Abfolge von Zuständen der Walzstraße in einem Kalibrierbetrieb eines anderen Walzgerüsts der Walzstraße.

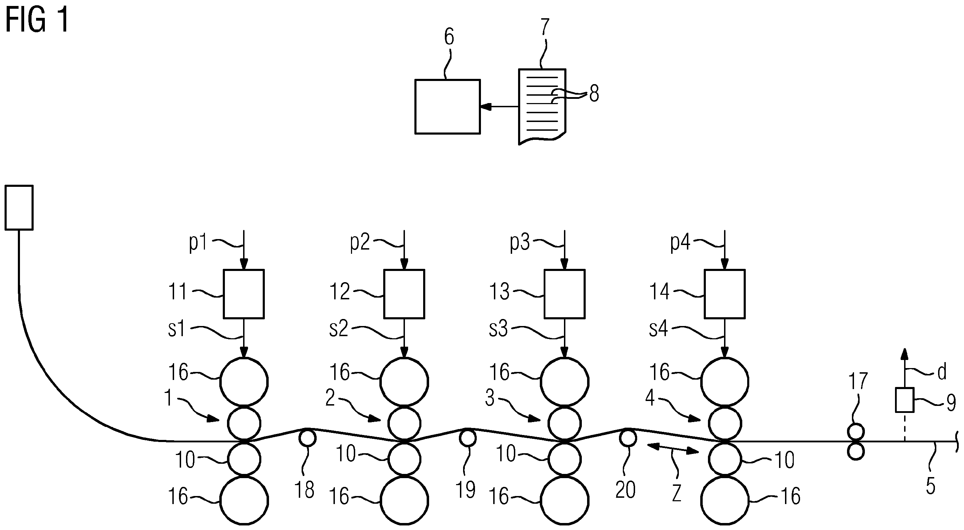

Gemäß FIG 1 weist eine Walzstraße mehrere Walzgerüste auf. Die Anzahl an Walzgerüsten kann variieren. Dargestellt ist in FIG 1 eine Walzstraße mit vier Walzgerüsten, die nachfolgend mit den Bezugszeichen 1 bis 4 bezeichnet sind. Es kann jedoch alternativ ebenso eine andere Anzahl von Walzgerüsten vorhanden sein, insbesondere 2, 3, 5, 6, 7 oder 8 Walzgerüste. Von den Walzgerüsten 1 bis 4 der Walzstraße wird ein Metallband 5 gewalzt. Bei dem Metallband 5 kann es sich beispielsweise um ein Stahlband oder um ein Aluminiumband handeln. Bei dem Walzen in der Walzstraße handelt es sich in der Regel um ein Warmwalzen. Oftmals ist der Walzstraße entsprechend der schematischen Darstellung in FIG 1 weiterhin eine Stranggießmaschine vorgeordnet. Dies ist im Rahmen der vorliegenden Erfindung jedoch von untergeordneter Bedeutung.

Die Walzstraße wird von einer Steuereinrichtung 6 gesteuert. Die Steuereinrichtung 6 ist derart ausgebildet, dass sie die Walzstraße gemäß einem Betriebsverfahren betreibt, das nachstehend näher erläutert wird.

In der Regel ist die Steuereinrichtung 6 als softwareprogrammierbare Steuereinrichtung ausgebildet. In diesem Fall wird die entsprechende Ausbildung der Steuereinrichtung 6 durch ein Computerprogramm 7 bewirkt, mit dem die Steuereinrichtung 6 programmiert ist. Das Computerprogramm 7 umfasst Maschinencode 8, der von der Steuereinrichtung 6 unmittelbar abarbeitbar ist. Die Abarbeitung des Maschinencodes 8 durch die Steuereinrichtung 6 bewirkt in diesem Fall, dass die Steuereinrichtung 6 die Walzstraße gemäß dem entsprechenden Betriebsverfahren betreibt.

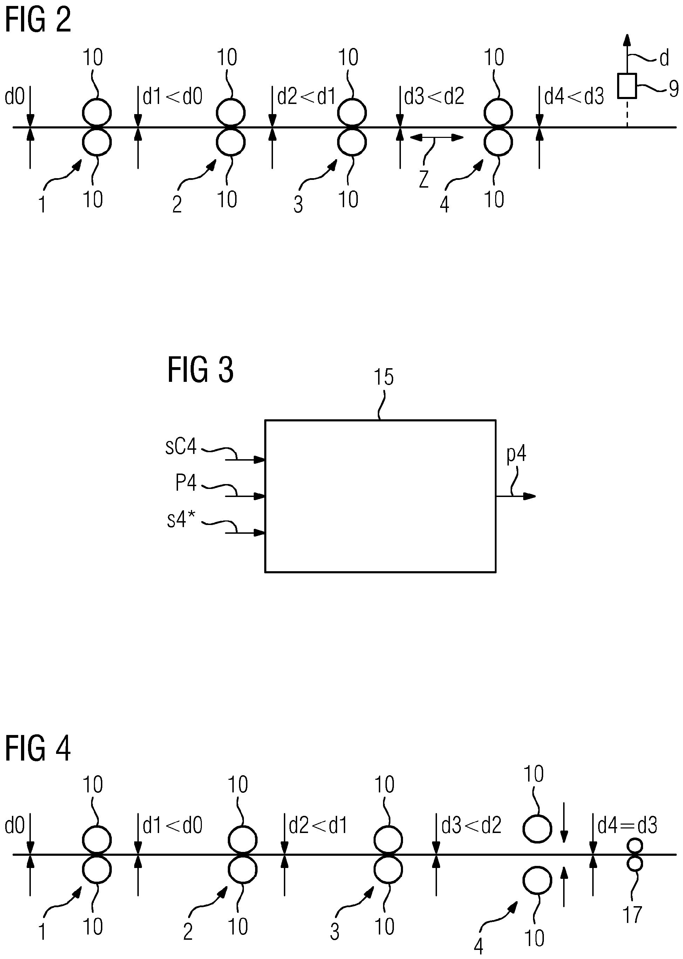

In einem Normalbetrieb der Walzgerüste 1 bis 4 erfolgt gemäß FIG 2 ein Walzen von einer Anfangsdicke d0 auf eine Enddicke d. Für jedes der Walzgerüste 1 bis 4 gilt, dass es sich im Normalbetrieb befindet, wenn und solange es das Metallband 5 entsprechend einem vorgegebenen Stichplan auf eine für das jeweilige Walzgerüst 1 bis 4 vorgegebene auslaufseitige Dicke d1 bis d4 walzt und damit die Walzstraße über die Gesamtheit der Walzgerüste 1 bis 4 gesehen das Metallband 5 von der Anfangsdicke d0 auf die Enddicke d walzt.

Den Walzgerüsten 1 bis 4 der Walzstraße ist eine Dickenmesseinrichtung 9 nachgeordnet. Mittels der Dickenmesseinrichtung 9 wird die Enddicke d des Metallbandes 5 erfasst. Der entsprechende Messwert wird der Steuereinrichtung 6 zugeführt.

Damit das jeweilige Walzgerüst 1 bis 4 das Metallband 5 auf seine jeweilige auslaufseitige Dicke d1 bis d4 walzt, müssen die Walzgerüste 1 bis 4 bzw. deren Arbeitswalzen 10 auf einen jeweiligen Walzspalt s1 bis s4 eingestellt werden. Das Einstellen der Walzspalte s1 bis s4 erfolgt (FIG 1) durch Stellglieder 11 bis 14 - in der Regel Hydraulikzylindereinheiten. Insbesondere wird jeweilige Stellglied 11 bis 14 zu diesem Zweck auf eine jeweilige Stellgliedposition p1 bis p4 eingestellt. Die Stellgliedpositionen p1 bis p4 werden derart bestimmt, dass der jeweilige Walzspalt s1 bis s4 eingestellt wird.

Die vorliegende Erfindung wird nachstehend zunächst in Verbindung mit dem letzten Walzgerüst 4 der viergerüstigen Walzstraße erläutert. Die entsprechenden Ausführungen sind jedoch auch für die anderen Walzgerüste 1 bis 3 der Walzstraße gültig. Auch sind die Ausführungen gültig, falls die Walzstraße eine andere Anzahl an Walzgerüsten 1 bis 4 aufweist, also beispielsweise 6 oder 7 Walzgerüste.

Die Steuereinrichtung 6 implementiert - in der Regel aufgrund der Programmierung durch das Computerprogramm 7 - für das Walzgerüst 4 ein Modell 15. Das Modell 15 beschreibt das Walzgerüst 4. Zum Ermitteln der einzustellenden Stellgliedposition p4 werden dem Modell 15 gemäß FIG 3 ein Kalibrierwert sC4 des Walzgerüsts 4, weitere Zustandsparameter P4 des Walzgerüsts 4 und der einzustellende Sollwalzspalt s4* vorgegeben. Das Modell 15 ermittelt sodann anhand des Kalibrierwerts sC4, der weiteren Zustandsparameter P4 und des Sollwalzspalts s4* die einzustellende Stellgliedposition p4.

Die entsprechende Vorgehensweise ist dem Fachmann allgemein bekannt. Sie wird nachstehend für den Fall erläutert, dass das Walzgerüst 4 als Quartogerüst ausgebildet ist, also als Walzgerüst, das zusätzlich zu den Arbeitswalzen 10 Stützwalzen 16 aufweist. Analoge Vorgehensweisen sind dem Fachmann jedoch auch für andere Walzgerüste bekannt, beispielsweise Sextogerüste, bei denen zusätzlich zu den Arbeitswalzen 10 und den Stützwalzen 16 Zwischenwalzen vorhanden sind.

Das modellierte Walzgerüst 4 wird im Rahmen des Modells 15 durch einzelne Elemente modelliert, die als mechanische Federn angesehen werden können. Die Elemente werden beispielsweise durch den Walzgerüstständer, eine obere und eine untere Druckplatte, Walzkraftmessdosen, die Walzen 10, 16 des Walzgerüsts 4, Walzenlager, eine Einrichtung zur Rückbiegung der Arbeitswalzen 10 und das Stellglied 14 zum Einstellen des Walzspaltes s4 gebildet. Den Elementen wird - einzeln oder gemeinsam - eine federnde Elastizität zugeschrieben. Weiterhin können zumindest einige dieser Elemente auch plastisch verformt werden, beispielsweise die Arbeitswalzen 10 durch thermische Balligkeit und Verschleiß. Die federnde Elastizität kann linear oder nichtlinear sein. Insbesondere die Elastizität, die aufgrund einer Walzenabplattung auftritt, ist stark nichtlinear. Auch können Abhängigkeiten mit anderen Größen wie beispielsweise der Walzgeschwindigkeit bestehen.

Es sind weiterhin drei prinzipielle Zustände des Walzgerüsts 4 zu betrachten, nämlich

- Zustand 1: Walzspalt s4 offen, Arbeitswalzen 10 angehoben, keine Berührung miteinander. Im Walzspalt befindet sich kein Metallband.
- Zustand 2: Walzspalt s4 geschlossen, ebenfalls kein Metallband 5 im Walzspalt s4 (d.h. die Arbeitswalzen 10 berühren sich), Arbeitswalzen 10 angehoben (d.h. die Einrichtung zur Rückbiegung der Arbeitswalzen 10 übt auf die Arbeitswalzen 10 eine rückbiegende Kraft aus, welche die Gewichtskraft der oberen Arbeitswalze 10 kompensiert).
- Zustand 3: Walzspalt s4 geschlossen, Metallband 5 im Walzspalt s4.

Für den Zustand 1 ergibt sich der Walzspalt s4 aus der lichten Weite des Fensters des Walzgerüstständers, von der die einzelnen Dimensionen der weiteren Elemente des Walzgerüsts 4 abgezogen werden, insbesondere die Radien der Stützwalzen 16, die Durchmesser der Arbeitswalzen 10, die wirksame Bauhöhe der Stützwalzeneinbaustücke und der Druckplatten, ein Offset für das Stellglied 14 zum Einstellen des Walzspaltes s4 (üblicherweise als kollabierte hydraulische Anstellung bezeichnet) und der Stellgliedposition p4. Hiervon werden noch Kompensationswerte abgezogen, insbesondere zur Berücksichtigung der thermischen Balligkeit und des Verschleißes der Arbeitswalzen 10 und einer Kompensation aus der Modellierung der Stützwalzenlager.

Im Zustand 1 wird die Messung der Walzkraft tariert, d.h. der momentan eingestellte Wert wird zu 0 gesetzt. Nun wird der Hub der hydraulischen Anstellung 14 allmählich erhöht, bis sich die Arbeitswalzen 10 berühren (sogenannter kissing point). Mit Erreichen des kissing points wird in den Zustand 2 übergegangen.

Mit dem Schließen des Walzspaltes s4 erreicht dieser den Wert 0. Einen kleineren Wert kann der Walzspalt s4 nicht annehmen. Wird nunmehr der Hub der hydraulischen Anstellung 14 weiter erhöht, muss diese Erhöhung durch eine entsprechende Auffederung des Walzgerüsts 4 bzw. von Elementen des Walzgerüsts 4 kompensiert werden. Der Walzspalt s4 kann daher ermittelt werden zu

$$s4 = sCAL4 - p4 + sC4 + D4 + BM4 + A4 + L4 + TW4 + s04 \qquad (1)$$

Hierbei haben die in obiger Gleichung verwendeten Größen folgende Bedeutung:

- s4 ist der Walzspalt s4.
- sCAL4 ist ein theoretischer Walzspalt, der im Kalibrierpunkt angenommen wird. Er gilt für die Walzkraft, die beim Kalibrieren des Walzspaltes s4 verwendet wird.

- p4 ist die Stellgliedposition p4. Sie wird messtechnisch erfasst.
- sC4 ist die Stellgliedposition, bei welcher der theoretische Walzspalt sCAL4 angenommen wird. Dieser Wert entspricht dem Kalibrierwert sC4 für das Walzgerüst 4.
- D4 ist die Auffederung des Walzgerüsts 4. Sie kann über die Federkennlinie des Walzgerüsts 4 in Verbindung mit der momentanen Walzkraft und der Walzkraft beim Kalibrieren des Walzspaltes s4 ohne weiteres ermittelt werden.
- BM4 ist die Kompensation für die Biegung der Arbeitswalzen 10. Sie kann mittels üblicher Walzenbiegemodelle ermittelt werden.
- A4 ist die Kompensation für die Abplattung der Arbeitswalzen 10 und gegebenenfalls auch der Stützwalzen 16. Sie kann mittels üblicher Abplattungsmodelle ermittelt werden.
- L4 ist die Kompensation für die Nachgiebigkeit der Lager der Stützwalzen 16. Sie kann mittels üblicher Modelle für die Lage der Stützwalzen 16 ermittelt werden.
- TW4 ist die Kompensation für die thermische Balligkeit und den Verschleiß der Arbeitswalzen 10. Sie kann mittels üblicher Modelle für die thermische Balligkeit und den Verschleiß der Arbeitswalzen 10 ermittelt werden.
- s04 ist eine Nullpunktkorrektur. Sie muss nur einmal parametriert werden.

Aus obiger Gleichung ist unter anderem ersichtlich, dass als Kalibrierwert sC4 prinzipiell jede Stellgliedposition p4 verwendet werden kann. Voraussetzung ist lediglich, dass das Walzgerüst 4 sich im Zustand 2 befindet. Vorzugsweise erfolgt die Ermittlung des Kalibrierwerts sC4 bei einer mittleren Walzkraft. Insbesondere kann eine walzkraftgeregelte Anstellung der Arbeitswalzen 10 erfolgen. Nach Erreichen der parametrierten Walzkraft (Kalibrierwalzkraft) wird der Kalibrierwert sC4 gespeichert und bis zu einer neuen Ermittlung des Kalibrierwerts sC4 beibehalten.

Auch andere Modellierungen sind möglich. Unabhängig vom genauen Aufbau des Modells 15 ist das Modell 15 jedoch in der Lage, anhand der ihm zugeführten Größen sC4, P4, s4* die einzustellende Stellgliedposition p4 zu ermitteln. Das Modell 15 ist also in der Lage, den letztendlich gewünschten Sollwalzspalt s4* in die hierfür erforderliche einzustellende Stellgliedposition p4 umzurechnen.

Von Zeit zu Zeit müssen die Arbeitswalzen 10 (manchmal zusätzlich auch die Stützwalzen 16) des Walzgerüsts 4 gewechselt werden. In diesem Fall wird das Walzgerüst 4 durch entsprechende Ansteuerung des Stellgliedes 14 aufgefahren, so dass die Arbeitswalzen 10 das Metallband 5 nicht mehr walzen und sogar nicht mehr kontaktieren. Das Metallband 5 durchläuft also das Walzgerüst 4, ohne dessen Arbeitswalzen 10 zu berühren. Das Auffahren des Walzgerüsts 4 kann mit einer Lastumverteilung vom Walzgerüst 4 auf die anderen Walzgerüste 1 bis 3 verbunden sein. Alternativ können die Lasten der anderen Walzgerüste 1 bis 3 beibehalten werden. Welche dieser beiden Vorgehensweisen ergriffen wird, ist im Rahmen der vorliegenden Erfindung von untergeordneter Bedeutung. Entscheidend ist, dass das Walzgerüst 4 mit dem Auffahren zum Walzenwechsel in einen Sonderbetrieb übergeht, nämlich den Walzenwechselbetrieb. Sofern der Walzstraße die Gießmaschine vorgeordnet ist, kann weiterhin eine Gießgeschwindigkeit der Gießmaschine reduziert werden.

Sodann werden die Arbeitswalzen 10 gewechselt. Soweit erforderlich, werden auch die Stützwalzen 16 gewechselt. Der Wechsel der Arbeitswalzen 10 und gegebenenfalls auch der Stützwalzen 16 kann in an sich bekannter Weise erfolgen. Auch die Art und Weise des Walzenwechsels ist im Rahmen der vorliegenden Erfindung von untergeordneter Bedeutung. Entscheidend ist, dass das Walzgerüst 4 in einen Kalibrierbetrieb übergeht, sobald der Walzenwechsel abgeschlossen ist.

Zum Zeitpunkt des Übergangs in den Kalibrierbetrieb ist das Walzgerüst 4 entsprechend der Darstellung in FIG 4 noch aufgefahren. Zu Beginn des Kalibrierbetriebs ist die Stellgliedposition p4 somit derart eingestellt, dass das Metallband 5 das Walzgerüst 4 durchläuft, ohne von den Arbeitswalzen 10 des Walzgerüsts 4 gewalzt zu werden. Entsprechend der Darstellung in FIG 4 wird das Metallband 5 in den anderen Walzgerüsten 1 bis 3 jedoch auf jeweilige auslaufseitige Dicken d1 bis d3 gewalzt. Die auslaufseitige Dicke d3 - die zu diesem Zeitpunkt mit der Enddicke d korrespondiert - kann insbesondere zwischen 3,5 mm und 1,5 mm liegen, beispielsweise bei 2,0 mm.

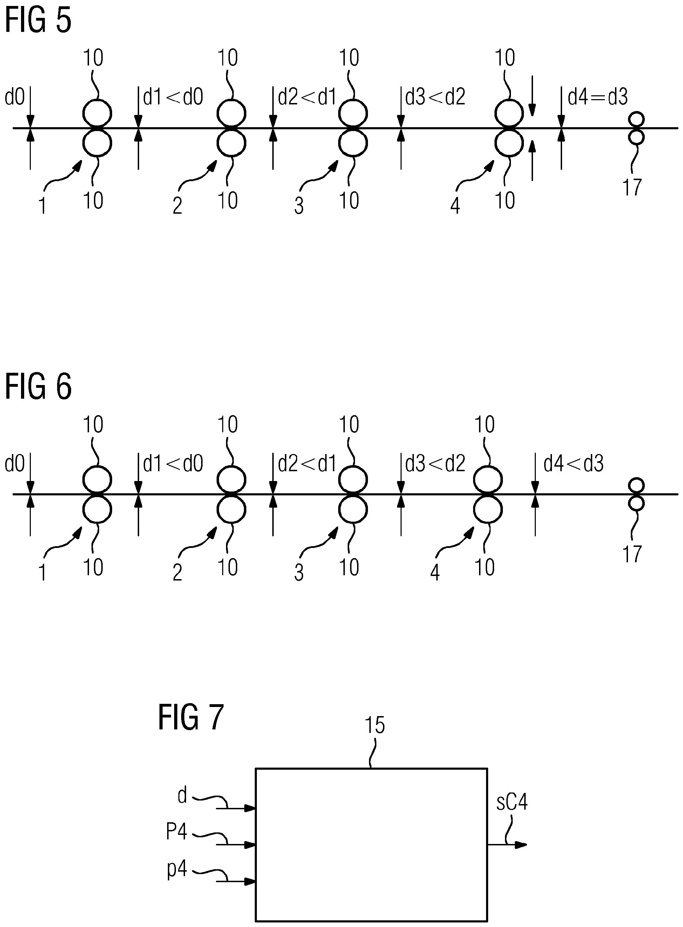

Der Zustand von FIG 4 kann, falls gewünscht oder erforderlich, für einen bestimmten Zeitraum aufrechterhalten werden. Unabhängig von der Länge dieses Zeitraums wird jedoch, ausgehend von dem Zustand von FIG 4, mit Ablauf des Zeitraums im Kalibrierbetrieb die Stellgliedposition p4 variiert. Insbesondere wird der zugehörige Walzspalt s4 nach und nach geschlossen. Das Schließen des Walzspaltes s4 ist in FIG 4 durch Pfeile neben den Arbeitswalzen 10 des Walzgerüsts 4 angedeutet. FIG 5 zeigt den Zustand, in dem die Arbeitswalzen 10 des Walzgerüsts 4 gerade auf das Metallband 5 aufgesetzt sind, dieses aber gerade noch nicht walzen. Wenn sich zwischen den Arbeitswalzen 10 kein Metallband 5 befände, entspräche dieser Zustand dem kissing point. Das Metallband 5 weist zu diesem Zeitpunkt sowohl einlaufseitig als auch auslaufseitig des Walzgerüsts 4 die Dicke d3 auf. Auch das Dickenmessgerät 9 erfasst als Enddicke d die Dicke d3.

Die Stellgliedposition p4 wird, ausgehend von dem Zustand von FIG 4, jedoch nicht nur so weit variiert, dass die Arbeitswalzen 10 des Walzgerüsts 4 gerade auf das Metallband 5 aufgesetzt sind. Vielmehr wird der Walzspalt s4 noch weiter geschlossen, bis ein (vorläufiger) Endzustand erreicht ist. Der vorläufige Endzustand entspricht einer möglichst guten Schätzung desjenigen Zustands, bei dem das Walzgerüst 4 das Metallband 5 auf eine gewünschte Enddicke d walzt. Das noch weitergehende Schließen des Walzspaltes s4 ist in FIG 5 - analog zu FIG 4 - durch Pfeile neben den Arbeitswalzen 10 des Walzgerüsts 4 angedeutet. Der vorläufige Endzustand ist in FIG 6 dargestellt. Gemäß FIG 6 ist die Stellgliedposition p4 derart eingestellt, dass die Arbeitswalzen 10 des Walzgerüsts 4 das Metallband 5 walzen, also dessen Dicke reduzieren. Hinter dem Walzgerüst 4 weist das Metallband 5 also die auslaufseitige Dicke d4 auf, wobei die auslaufseitige Dicke d4 kleiner als die auslaufseitige Dicke d3 hinter dem vorgeordneten Walzgerüst 3 ist. Die auslaufseitige Dicke d4 kann insbesondere zwischen 3,0 mm und 1,0 mm liegen, beispielsweise bei 2,0 mm. In der Regel liegt das Verhältnis der auslaufseitigen Dicke d4 zur auslaufseitigen Dicke d3 zwischen 0,8 und 0,95.

Die Dickenmesseinrichtung 9 erfasst entsprechend der Darstellung in FIG 6 als Enddicke d zunächst noch den Wert d3. Wenn jedoch die von dem Walzgerüst 4 gewalzte Länge des Metallbandes 5 hinreichend groß ist, erfasst die Dickenmesseinrichtung 9 als Enddicke d den Wert d4.

Die von der Dickenmesseinrichtung 9 erfasste Enddicke d wird laufend der Steuereinrichtung 6 zugeführt. Die Steuereinrichtung 6 ermittelt weiterhin einen Zeitpunkt, zu dem die Enddicke d von dem Wert d3 auf den Wert d4 wechselt. Beispielsweise kann die Steuereinrichtung 6 zu diesem Zweck den zeitlichen Verlauf der Enddicke d auf einen entsprechenden Dickensprung hin auswerten. Alternativ ist es möglich, dass die Steuereinrichtung 6 eine Wegverfolgung des Metallbandes 5 durchführt. Eine Wegverfolgung ist Fachleuten allgemein bekannt.

Unabhängig davon, auf welche Weise die Steuereinrichtung 6 den Zeitpunkt des Dickensprungs ermittelt, werden dem Modell 15 entsprechend der Darstellung in FIG 7 nach diesem Zeitpunkt die Dicke d, die weiteren Zustandsparameter P4 und die Stellgliedposition p4 zugeführt. Das Modell 15 ermittelt anhand der Dicke d, der weiteren Zustandsparameter P4 und der Stellgliedposition p4 den Kalibrierwert sC4 des Walzgerüsts 4.

Es ist möglich, dass eine direkte Invertierung des Modells 15 möglich ist, dass also direkt anhand der Dicke d, der weiteren Zustandsparameter P4 und der Stellgliedposition p4 der Kalibrierwert sC4 des Walzgerüsts 4 ermittelt werden kann. Insbesondere kann die Gleichung (1) nach dem Kalibrierwert sC4 aufgelöst werden. Alternativ ist es möglich, zunächst einen vorläufigen Kalibrierwert sC4 des Walzgerüsts 4 anzusetzen, anhand der Dicke den Walzspalt s4 zu ermitteln (im einfachsten Fall muss lediglich die Dicke d als Walzspalt s4 übernommen werden) und den vorläufigen Kalibrierwert sC4, den Walzspalt s4 und die weiteren Zustandsparameter P4 dem Modell 15 zuzuführen. Je nachdem, welche Stellgliedposition p4 das Modell 15 ermittelt, kann in diesem Fall der vorläufige Kalibrierwert sC4 nach oben oder unten korrigiert werden. Diese Vorgehensweise kann, sofern erforderlich, mehrmals wiederholt werden, bis eine hinreichende Übereinstimmung zwischen der Stellgliedposition p4 und der mittels des Modells 15 ermittelten Stellgliedposition p4 erreicht wird.

Mit der Ermittlung des Kalibrierwerts sC4 ist der Kalibrierbetrieb abgeschlossen. Es wird daher bezüglich des Walzgerüsts 4 vom Kalibrierbetrieb in den Normalbetrieb übergegangen. Im Normalbetrieb wird, wie bereits erläutert, mittels des Modells 15 anhand des Kalibrierwerts sC4 des Walzgerüsts 4, der weiteren Zustandsparameter P4 und des einzustellenden Walzspaltes s4 die einzustellende Stellgliedposition p4 ermittelt. Der Kalibrierwert sC4, der von dem Modell 15 herangezogen wird, ist derjenige Kalibrierwert, der im Kalibrierbetrieb ermittelt wurde. Falls die gemessene Enddicke d von einer gewünschten Enddicke abweicht, wird weiterhin unmittelbar zu Beginn des Normalbetriebs die Stellgliedposition p4 nachgeführt, um den Walzspalt s4 derart einzustellen, dass das Metallband 5 auf die gewünschte Enddicke d gewalzt wird.

Im Normalbetrieb ist das Walzgerüst 4 aktiv, d.h. es walzt das Metallband 5. Es ist daher insbesondere auch möglich, mittels des Walzgerüsts 4 zum vorgeordneten Walzgerüst 3 hin einen Zug Z auf das Metallband 5 auszuüben. Der Zug Z ist insbesondere erforderlich, um eine Stabilität des Walzprozesses zu gewährleisten. Zum Wechseln der Walzen 10, 16 des Walzgerüsts 4 wird das Walzgerüst 4 jedoch aufgefahren. Es kann daher keinen Zug auf das Metallband 5 ausüben. Um dennoch weiterhin den Zug Z auf das Metallband 5 ausüben zu können, ist dem Walzgerüst 4 entsprechend der Darstellung in FIG 1 und den FIG 4 bis 6 ein Treiber 17 nachgeordnet. Der Treiber 17 kann der Dickenmesseinrichtung 9 entsprechend der Darstellung in FIG 1 vorgeordnet sein. Alternativ kann der Treiber 17 der Dickenmesseinrichtung 9 nachgeordnet sein. Der Treiber 17 beaufschlagt im Kalibrierbetrieb das Metallband 5 auslaufseitig des Walzgerüsts 4 mit einem definierten Zug Z. Das Übernehmen des Zuges Z durch den Treiber 17 beim Auffahren des Walzgerüsts 4 kann stoßfrei erfolgen.

Im Unterschied zum Walzgerüst 4 bewirkt der Treiber 17 keine plastische Querschnittsreduzierung des Metallbandes 5. Das Metallband 5 weist also sowohl vor als auch nach dem Treiber 17 die gleiche Enddicke d auf. Der Wert des Zuges Z ist vorzugsweise identisch mit dem Zug Z, der zuvor im Normalbetrieb von dem Walzgerüst 4 auf das Metallband 5 ausgeübt wird. Aufgrund des Umstands, dass das Walzgerüst 4 im Kalibrierbetrieb (zumindest zu Beginn des Kalibrierbetriebs) aufgefahren ist, pflanzt sich der Zug Z jedoch durch das Walzgerüst 4 hindurch zum vorgeordneten Walzgerüst 3 fort. Dies gilt, bis die Arbeitswalzen 10 des Walzgerüsts 4 im Kalibrierbetrieb das Metallband 5 wieder berühren. In diesem Zustand ist es möglich, dass der Zug Z beim Schließen des Walzspaltes s4 von dem Walzgerüst 4 stoßfrei übernommen wird.

Zwischen den Walzgerüsten 1 bis 4 der Walzstraße sind weiterhin oftmals Schlingenheber 18 bis 20 angeordnet. Mittels der Schlingenheber 18 bis 20 wird die zwischen den Walzgerüsten 1 bis 4 befindliche Länge an Metallband 5 variiert und weiterhin der Zug Z zwischen den Walzgerüsten 1 bis 4 beeinflusst. Insbesondere ist dem letzten Walzgerüst 4 der Schlingenheber 20 vorgeordnet. Während des Wechselns der Walzen 10, 16 des Walzgerüsts 4 und auch im Kalibrierbetrieb des Walzgerüsts 4 wird der Schlingenheber 20 in einer definierten und konstanten Höhenlage gehalten. Die Höhenlage ist derart bestimmt, dass das Metallband 5 das Wechseln der Walzen 10, 16 des Walzgerüsts 4 nicht behindert.

Dem Walzgerüst 4 sind weiterhin die Walzgerüste 1 bis 3 vorgeordnet. Im Normalbetrieb der Walzstraße (d.h. wenn sich alle Walzgerüste 1 bis 4 der Walzstraße im Normalbetrieb befinden) ist es möglich, von Zeit zu Zeit den Stichplan der Walzstraße zu ändern, also die einzelnen auslaufseitigen Dicken d1 bis d4 und die zugehörigen Betriebsparameter der Walzgerüste 1 bis 4 neu vorzugeben. Während des Wechselns der Walzen 10, 16 des Walzgerüsts 4 kann unter Umständen der Stichplan der Walzstraße für die vorgeordneten Walzgerüste 1 bis 3 geändert werden. Alternativ kann der Stichplan für die vorgeordneten Walzgerüste 1 bis 3 beibehalten werden. Auch während des Kalibrierbetriebs ist eine Änderung des Stichplans für die vorgeordneten Walzgerüste 1 bis 3 möglich. Im Rahmen der vorliegenden Erfindung wird der Stichplan für die vorgeordneten Walzgerüste 1 bis 3 vorzugsweise jedoch ab dem Zeitpunkt nicht mehr geändert, zu dem mit dem Variieren der Stellgliedposition p4 des Stellgliedes 14 des letzten Walzgerüsts 4 begonnen wird. Anders ausgedrückt: Solange sich die Arbeitswalzen 10 des Walzgerüsts 4 statisch in der in FIG 4 gezeigten Positionierung befinden, ist es zulässig, den Stichplan der Walzstraße für die vorgeordneten Walzgerüste 1 bis 3 zu ändern. Ab dem Zeitpunkt, zu dem mit dem Ändern der Stellgliedposition p4 begonnen wird, wird der Stichplan für die vorgeordneten Walzgerüste 1 bis 3 jedoch vorzugsweise unverändert beibehalten.

Der Stichplan für die vorgeordneten Walzgerüste 1 bis 3 wird insbesondere beibehalten, bis die Steuereinrichtung 6 den Kalibrierwert sC4 des letzten Walzgerüsts 4 ermittelt hat und das letzte Walzgerüst 4 wieder in den Normalbetrieb übernimmt. Ab diesem Zeitpunkt ist es wieder möglich, den Stichplan der Walzstraße - diesmal nicht nur für die vorgeordneten Walzgerüste 1 bis 3, sondern für die Walzgerüste 1 bis 4 - erneut zu ändern. Beispielsweise kann eine reine Lastumverteilung vorgenommen werden oder das Metallband 5 auf eine neue Enddicke d gewalzt werden.

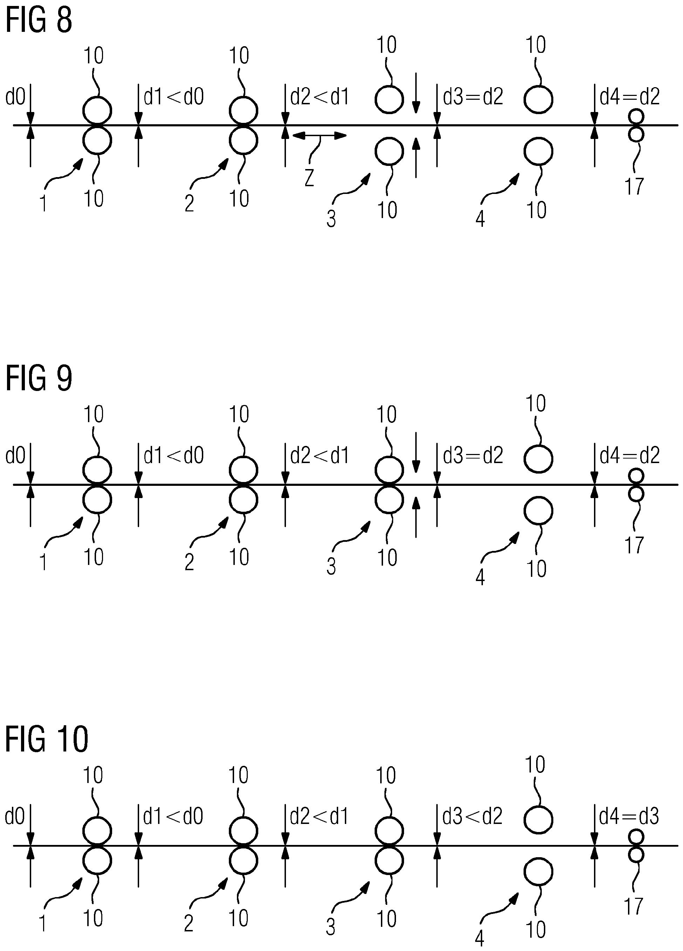

Die vorliegende Erfindung wurde bisher für das letzte Walzgerüst 4 der Walzstraße erläutert. In diesem Fall ist zwischen dem Walzgerüst 4 und der Dickenmesseinrichtung 9 kein weiteres Walzgerüst angeordnet. Die erfindungsgemäße Kalibrierung eines Walzgerüsts 1 bis 4 ist jedoch auch dann möglich, wenn zwischen dem jeweiligen Walzgerüst 1 bis 3 und der Dickenmesseinrichtung 9 mindestens ein weiteres Walzgerüst 2 bis 4 angeordnet ist. Dies wird nachstehend in Verbindung mit den FIG 8 bis 10 beispielhaft für das vorletzte Walzgerüst 3 der Walzstraße erläutert.

Die Vorgehensweise bezüglich des vorletzten Walzgerüsts 3 ist vom Ansatz her identisch mit der Vorgehensweise bezüglich des letzten Walzgerüsts 4. Die obenstehenden Erläuterungen zur Vorgehensweise beim letzten Walzgerüst 4 sind 1:1 anwendbar. Entscheidend ist jedoch, dass während des Zeitraums, zu dem das vorletzte Walzgerüst 3 sich im Kalibrierbetrieb befindet, bei dem letzten Walzgerüst 4 die Stellgliedposition p4 entsprechend der Darstellung in den FIG 8 bis 10 derart eingestellt ist, dass das Metallband 5 das letzte Walzgerüst 4 durchläuft, ohne von Arbeitswalzen 10 des letzten Walzgerüsts 4 gewalzt zu werden. In der Regel ist die Stellgliedposition p4 derart eingestellt, dass die Arbeitswalzen 10 des letzten Walzgerüsts 4 das Metallband 5 nicht berühren. Der Walzspalt s4 des letzten Walzgerüsts 4 ist daher aufgefahren. Die vorgeordneten Walzgerüste sind in diesem Fall das erste und das zweite Walzgerüst 1, 2.

Aufgrund des Umstands, dass das letzte Walzgerüst 4 der Walzstraße aufgefahren ist, wirkt der von dem Treiber 17 auf das Metallband 5 aufgebrachte Zug Z direkt auslaufseitig des Walzgerüsts 2. Um weiterhin zu gewährleisten, dass das Metallband 5 das Wechseln der Arbeitswalzen 10 des Walzgerüsts 3 nicht behindert, wird weiterhin bezüglich des Walzgerüsts 3 nicht nur der Schlingenheber 19, sondern auch der Schlingenheber 20 beim Wechseln der Walzen 10, 16 des Walzgerüsts 3 und auch im Kalibrierbetrieb des Walzgerüsts 3 in einer definierten Höhenlage gehalten. Sofern Änderungen des Stichplans vorgenommen werden, sind diese Änderungen des Stichplans während des Kalibrierbetriebs des Walzgerüsts 3 auf die dem Walzgerüst 3 vorgeordneten Walzgerüste 1 und 2 beschränkt.

In analoger Weise kann auch das Walzgerüst 2 kalibriert werden. In diesem Fall kommt es darauf an, dass während des Zeitraums, zu dem das Walzgerüst 2 sich im Kalibrierbetrieb befindet, bei dem vorletzten Walzgerüst 3 und bei dem letzten Walzgerüst 4 die Stellgliedposition p3, p4 jeweils derart eingestellt ist, dass das Metallband 5 das entsprechende Walzgerüst 3, 4 durchläuft, ohne von Arbeitswalzen 10 des jeweiligen Walzgerüsts 3, 4 gewalzt zu werden. Das vorgeordnete Walzgerüst ist in diesem Fall das Walzgerüst 1.

Prinzipiell ist es möglich, die Walzen 10, 16 eines der vorderen Walzgerüste 1 bis 3 - beispielsweise des vorletzten Walzgerüsts 3 - zu wechseln, ohne zugleich auch die Walzen 10, 16 der dem betreffenden Walzgerüst 1 bis 3 nachgeordneten Walzgerüste 2 bis 4 - beispielsweise des letzten Walzgerüsts 4 - zu wechseln. Denn zwingend ist lediglich erforderlich, dass die dem jeweiligen Walzgerüst 1 bis 3 nachgeordneten Walzgerüste 2 bis 4 aufgefahren werden. In aller Regel werden jedoch zusammen mit den Walzen 10, 16 eines bestimmten Walzgerüsts 1 bis 3 auch die Walzen 10, 16 aller nachgeordneten Walzgerüste 2 bis 4 gewechselt. In diesem Fall erfolgt die Kalibrierung der Walzgerüste 1 bis 4, deren Walzen 10, 16 gewechselt wurden, sequenziell nacheinander in Bandlaufrichtung.

Zusammengefasst betrifft die vorliegende Erfindung somit folgenden Sachverhalt:

In einem Normalbetrieb eines Walzgerüsts z.B. 4 einer Walzstraße werden durch Einstellen einer Stellgliedposition p4 eines Stellgliedes 14 des Walzgerüsts 4 Arbeitswalzen 10 des Walzgerüsts 4 auf einen Walzspalt s4 eingestellt, so dass die Arbeitswalzen 10 das Metallband 5 walzen. Zum Ermitteln der einzustellenden Stellgliedposition p4 werden einem Modell 15 des Walzgerüsts 4 ein Kalibrierwert sC4 des Walzgerüsts 4, weitere Zustandsparameter P4 des Walzgerüsts 4 und ein Sollwalzspalt s4* vorgegeben. Das Modell 15 ermittelt daraus die einzustellende Stellgliedposition p4. Im Kalibrierbetrieb ist die Stellgliedposition p4 zunächst derart eingestellt, dass das Metallband 5 das Walzgerüst 4 durchläuft, ohne gewalzt zu werden. Die Stellgliedposition p4 wird variiert, so dass die Arbeitswalzen 10 das Metallband 5 walzen. Mittels einer nachgeordneten Dickenmesseinrichtung 9 wird eine Dicke d des Metallbandes 5 erfasst. Die Dicke d, die weiteren Zustandsparameter P4 und die Stellgliedposition p4 werden dem Modell 15 zugeführt, das daraus den Kalibrierwert sC4 ermittelt. Sodann wird wieder in den Normalbetrieb übergegangen und hierbei zum Ermitteln von einzustellenden Stellgliedpositionen p4 als Kalibrierwert sC4 des jeweiligen Walzgerüsts 4 der zuvor ermittelte Kalibrierwert sC4 herangezogen.

Die vorliegende Erfindung weist viele Vorteile auf. Insbesondere ist es möglich, trotz des fliegenden Wechsels der Walzen 10, 16 von Walzgerüsten 1 bis 4 die Walzgerüste 1 bis 4 hochgenau zu kalibrieren, ohne den kontinuierlichen Betrieb der Walzstraße unterbrechen zu müssen. Stillstandzeiten und damit verbundene Produktivitätsreduzierungen können vermieden werden. Die Kalibrierung ist weiterhin nicht nur dann möglich, wenn die gewechselten Arbeitswalzen 10 eine glatte Oberfläche aufweisen. Die Kalibrierung ist vielmehr auch dann möglich, wenn die gewechselten Arbeitswalzen 10 eine definierte Oberflächenkontur aufweisen, beispielsweise eine Riffelung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 bis 4 | Walzgerüste |
| 5 | Metallband |
| 6 | Steuereinrichtung |
| 7 | Computerprogramm |
| 8 | Maschinencode |
| 9 | Dickenmesseinrichtung |
| 10 | Arbeitswalzen |
| 11 bis 14 | Stellglieder |
| 15 | Modell |
| 16 | Stützwalzen |
| 17 | Treiber |
| 18 bis 20 | Schlingenheber |

| d0 | Anfangsdicke |
| d | Enddicke |
| d1 bis d4 | auslaufseitige Dicken |
| P1 bis P4 | Zustandsparameter |
| p1 bis p4 | Stellgliedpositionen |
| s1 bis s4 | Walzspalte |
| s1* bis s4* | Sollwalzspalte |
| sC1, sC4 | Kalibrierwerte |
| Z | Zug |

**Patentansprüche**

1.  Betriebsverfahren für eine Walzstraße mit mehreren Walzgerüsten (1 bis 4) zum Walzen eines Metallbandes (5),

    - wobei die Walzgerüste (1 bis 4) - bezogen auf ein jeweilige Walzgerüst (1 bis 4) - zeitweise in einem Normalbetrieb und zeitweise in einem Kalibrierbetrieb betrieben werden,

- wobei im Normalbetrieb durch Einstellen einer Stellgliedposition (p1 bis p4) eines Stellgliedes (10 bis 14) des jeweiligen Walzgerüsts (1 bis 4) Arbeitswalzen (10) des jeweiligen Walzgerüsts (1 bis 4) auf einen Walzspalt (s1 bis s4) eingestellt werden, so dass die Arbeitswalzen (10) das Metallband (5) walzen,

- wobei zum Ermitteln der einzustellenden Stellgliedposition (p1 bis p4) einem das jeweilige Walzgerüst (1 bis 4) beschreibenden Modell (15) ein Kalibrierwert (sC1 bis sC4) des jeweiligen Walzgerüsts (1 bis 4), weitere Zustandsparameter (P1 bis P4) des jeweiligen Walzgerüsts (1 bis 4) und ein einzustellender Sollwalzspalt (s1* bis s4*) vorgegeben werden und das Modell (15) anhand des Kalibrierwerts (sC1 bis sC4), der weiteren Zustandsparameter (P1 bis P4) und des Sollwalzspalts (s1* bis s4*) die einzustellende Stellgliedposition (p1 bis p4) ermittelt,

- wobei im Kalibrierbetrieb der Kalibrierwert des jeweiligen Walzgerüsts (1 bis 4) ermittelt wird und sodann vom Kalibrierbetrieb in den Normalbetrieb übergegangen wird und

- wobei im Normalbetrieb zum Ermitteln der einzustellenden Stellgliedposition (p1 bis p4) als Kalibrierwert (sC1 bis sC4) des jeweiligen Walzgerüsts (1 bis 4) der im Kalibrierbetrieb ermittelte Kalibrierwert (sC1 bis sC4) herangezogen wird, **dadurch gekennzeichnet,**

- **dass** im Kalibrierbetrieb die Stellgliedposition (p1 bis p4) zunächst derart eingestellt ist, dass das Metallband (5) das Walzgerüst (1 bis 4) durchläuft, ohne von den Arbeitswalzen (10) gewalzt zu werden,

- **dass** sodann im Kalibrierbetrieb die Stellgliedposition (p1 bis p4) variiert wird, so dass die Arbeitswalzen (10) das Metallband (5) walzen,

- **dass** im Kalibrierbetrieb mittels einer dem jeweiligen Walzgerüst (1 bis 4) nachgeordneten Dickenmesseinrichtung (9) eine Dicke (d) des Metallbandes (5) erfasst wird, mit der das Metallband (5) aus dem jeweiligen Walzgerüst (1 bis 4) ausläuft, und

- **dass** die Dicke (d), die weiteren Zustandsparameter (P1 bis P4) und die Stellgliedposition (p1 bis p4) dem Modell (15) zugeführt werden und das Modell (15) anhand der Dicke (d), der weiteren Zustandsparameter (P1 bis P4) und der Stellgliedposition (p1 bis p4) den Kalibrierwert (sC1 bis sC4) des jeweiligen Walzgerüsts (4) ermittelt.

2. Betriebsverfahren nach Anspruch 1,
   **dadurch gekennzeichnet,**
   **dass** zwischen dem jeweiligen Walzgerüst (4) und der Dickenmesseinrichtung (9) entweder kein weiteres Walzgerüst angeordnet ist oder dass zwischen dem jeweiligen Walzgerüst (1 bis 3) und der Dickenmesseinrichtung (9) zwar mindestens ein weiteres Walzgerüst (2 bis 4) angeordnet ist, während des Kalibrier-betriebs des jeweiligen Walzgerüsts (1 bis 3) jedoch bei allen weiteren Walzgerüsten (2 bis 4) die jeweilige Stellgliedposition (p2 bis p4) derart eingestellt ist, dass das Metallband (5) das jeweilige weitere Walzgerüst (2 bis 4) durchläuft, ohne von Arbeitswalzen (10) des jeweiligen weiteren Walzgerüsts (2 bis 4) gewalzt zu werden.

3. Betriebsverfahren nach Anspruch 1 oder 2,
   **dadurch gekennzeichnet,**
   **dass** die Walzstraße einen Treiber (17) aufweist, der dem jeweiligen Walzgerüst (1 bis 4) nachgeordnet ist und dass der Treiber (17) das Metallband (5) im Kalibrierbetrieb des jeweiligen Walzgerüsts (1 bis 4) auslaufseitig des jeweiligen Walzgerüsts (1 bis 4) mit einem definierten Zug (Z) beaufschlagt.

4. Betriebsverfahren nach Anspruch 3,
   **dadurch gekennzeichnet,**
   **dass** der Treiber (17) hinter dem letzten Walzgerüst (4) der Walzstraße angeordnet ist.

5. Betriebsverfahren nach einem der obigen Ansprüche,
   **dadurch gekennzeichnet,**
   **dass** die Walzstraße einen dem jeweiligen Walzgerüst (2 bis 4) vorgeordneten Schlingenheber (18 bis 20) aufweist und dass der dem jeweiligen Walzgerüst (2 bis 4) vorgeordnete Schlingenheber (18 bis 20) im Kalibrierbetrieb in einer definierten Höhenlage gehalten wird.

6. Betriebsverfahren nach einem der obigen Ansprüche,
   **dadurch gekennzeichnet,**
   **dass** die Walzstraße einen dem jeweiligen Walzgerüst (1 bis 3) nachgeordneten Schlingenheber (18 bis 20) aufweist und dass der dem jeweiligen Walzgerüst (1 bis 3) nachgeordnete Schlingenheber (18 bis 20) im Kalibrierbetrieb in einer definierten Höhenlage gehalten wird.

7. Betriebsverfahren nach einem der obigen Ansprüche,

**dadurch gekennzeichnet,**
**dass** dem jeweiligen Walzgerüst (2 bis 4) mindestens ein anderes Walzgerüst (1 bis 3) vorgeordnet ist und dass, beginnend mit dem Zeitpunkt, zu dem mit dem Variieren der Stellgliedposition (p2 bis p4) des Stellgliedes (12 bis 14) des jeweiligen Walzgerüsts (2 bis 4) begonnen wird, bis zu dem Zeitpunkt, zu dem bezüglich des jeweiligen Walzgerüsts (2 bis 4) vom Kalibrierbetrieb in den Normalbetrieb übergegangen wird, ein Stichplan, gemäß dem die anderen Walzgerüste (1 bis 3) betrieben werden, unverändert bleibt.

8. Betriebsverfahren nach Anspruch 7,
**dadurch gekennzeichnet,**
**dass** nach dem Zeitpunkt, zu dem bezüglich des jeweiligen Walzgerüsts (2 bis 4) vom Kalibrierbetrieb in den Normalbetrieb übergegangen wird, ein Stichplan, gemäß dem das jeweilige Walzgerüst (2 bis 4) und die anderen Walzgerüste (1 bis 3) betrieben werden, geändert wird.

9. Computerprogramm für eine Steuereinrichtung (6) einer Walzstraße mit mehreren Walzgerüsten (1 bis 4) zum Walzen eines Metallbandes (5), wobei das Computerprogramm Maschinencode (8) umfasst, der von der Steuereinrichtung (6) unmittelbar abarbeitbar ist, wobei die Abarbeitung des Maschinencodes (8) durch die Steuereinrichtung (6) bewirkt, dass die Steuereinrichtung (6) die Walzstraße gemäß einem Betriebsverfahren nach einem der obigen Ansprüche betreibt.

10. Steuereinrichtung einer Walzstraße mit mehreren Walzgerüsten (1 bis 4) zum Walzen eines Metallbandes (5), wobei die Steuereinrichtung derart ausgebildet ist, dass sie die Walzstraße gemäß einem Betriebsverfahren nach einem der Ansprüche 1 bis 8 betreibt.

11. Walzstraße mit mehreren Walzgerüsten (1 bis 4) zum Walzen eines Metallbandes (5) und mit einer Steuereinrichtung (6) nach Anspruch 10, wobei die Walzstraße von der Steuereinrichtung (6) gesteuert wird.

**Claims**

1. Operating method for a roll train having a plurality of roll stands (1 to 4) for rolling a metal strip (5),

   - wherein the roll stands (1 to 4) - in relation to a respective roll stand (1 to 4) - are sometimes operated in a normal operation and sometimes operated in a calibration operation,
   - wherein work rolls (10) of the respective roll stand (1 to 4) are set to a roll gap (s1 to S4) such that the work rolls (10) roll the metal strip (5) during normal operation by virtue of setting a control element position (p1 to p4) of a control element (10 to 14) of the respective roll stand (1 to 4),
   - wherein a calibration value (sC1 to sC4) of the respective roll stand (1 to 4), further state parameters (P1 to P4) of the respective roll stand (1 to 4) and a setpoint roll gap (s1* to s4*) to be set are predetermined for a model (15) describing the respective roll stand (1 to 4) for the purposes of establishing the control element position to be set (p1 to p4) and the model (15) establishes the control element position (p1 to p4) to be set on the basis of the calibration value (sC1 to sC4), the further state parameters (P1 to P4) and the setpoint roll gap (s1* to s4*),
   - wherein the calibration value of the respective roll stand (1 to 4) is established during the calibration operation and this is followed by a transition from the calibration operation to the normal operation and
   - wherein the calibration value (sC1 to sC4) established in the calibration operation is used during the normal operation for establishing the control element position (p1 to p4) to be set as calibration value (sC1 to sC4) of the respective roll stand (1 to 4),
   **characterized**
   - **in that** the control element position (p1 to p4) is initially set during the calibration operation in such a way that the metal strip (5) passes through the roll stand (1 to 4) without being rolled by the work rolls (10),
   - **in that** the control element position (p1 to p4) is thereupon varied during the calibration operation such that the work rolls (10) roll the metal strip (5),
   - **in that** a thickness (d) of the metal strip (5) is captured during the calibration operation by means of a thickness measuring device (9) disposed downstream of the respective roll stand (1 to 4), the thickness being that with which the metal strip (5) runs out of the respective roll stand (1 to 4), and
   - **in that** the thickness (d), the further state parameters (P1 to P4) and the control element position (p1 to p4) are supplied to the model (15) and the model (15) establishes the calibration value (sC1 to sC4) of the respective roll stand (4) on the basis of the thickness (d), the further state parameters (P1 to P4) and the control element position (p1 to p4).

2. Operating method according to Claim 1,
**characterized**
**in that** either no further roll stand is arranged between the respective roll stand (4) and the thickness measuring device (9) or in that, although at least one further roll stand (2 to 4) is arranged between the respective roll stand (1 to 3) and the thickness measuring device (9), a respective control element position (p2 to p4) is set for all further roll stands (2 to 4) during the calibration operation of the respective roll stand (1 to 3) such that the metal strip (5) passes through the respective further roll stand (2 to 4) without being rolled by work rolls (10) of the respective further roll stand (2 to 4).

3. Operating method according to Claim 1 or 2,
**characterized**
**in that** the roll train has a driver (17) which is disposed downstream of the respective roll stand (1 to 4) and in that the driver (17) applies a defined pull (Z) on the metal strip (5) on the run-out side of the respective roll stand (1 to 4) during the calibration operation of the respective roll stand (1 to 4).

4. Operating method according to Claim 3,
**characterized**
**in that** the driver (17) is arranged downstream of the ultimate roll stand (4) of the roll train.

5. Operating method according to any one of the preceding claims,
**characterized**
**in that** the roll train has a loop lifter (18 to 20) disposed upstream of the respective roll stand (2 to 4) and in that the loop lifter (18 to 20) disposed upstream of the respective roll stand (2 to 4) is kept at a defined elevation during the calibration operation.

6. Operating method according to any one of the preceding claims,
**characterized**
**in that** the roll train has a loop lifter (18 to 20) disposed downstream of the respective roll stand (1 to 3) and in that the loop lifter (18 to 20) disposed downstream of the respective roll stand (1 to 3) is kept at a defined elevation during the calibration operation.

7. Operating method according to any one of the preceding claims,
**characterized**
**in that** at least one other roll stand (1 to 3) is disposed upstream of the respective roll stand (2 to 4) and in that, from the moment at which the varying of the control element position (p2 to p4) of the control element (12 to 14) of the respective roll stand (2 to 4) starts until the moment at which there is a transition from the calibration operation to the normal operation in respect of the respective roll stand (2 to 4), a pass sequence, according to which the other roll stands (1 to 3) are operated, remains unchanged.

8. Operating method according to Claim 7,
**characterized**
**in that**, after the moment at which there is a transition from the calibration operation to the normal operation in respect of the respective roll stand (2 to 4), a pass sequence, according to which the respective roll stand (2 to 4) and the other roll stands (1 to 3) are operated, is modified.

9. Computer program for a control device (6) of a roll train having a plurality of roll stands (1 to 4) for rolling a metal strip (5), wherein the computer program comprises machine code (8), which is immediately executable by the control device (6), wherein executing the machine code (8) by the control device (6) causes the control device (6) to operate the roll train according to an operating method according to any one of the preceding claims.

10. Control device of a roll train having a plurality of roll stands (1 to 4) for rolling a metal strip (5), wherein the control device is embodied in such a way that it operates the roll train according to an operating method according to any one of Claims 1 to 8.

11. Roll train having a plurality of roll stands (1 to 4) for rolling a metal strip (5) and having a control device (6) according to Claim 10, wherein the roll train is controlled by the control device (6).

**Revendications**

1. Procédé de fonctionnement pour un train de laminoir avec plusieurs cages de laminoir (1 à 4) pour le laminage d'une bande métallique (5),

   - dans lequel les cages de laminoir (1 à 4) sont mises en fonctionnement - par rapport à une cage de laminoir respective (1 à 4) - par moments dans un fonctionnement normal et par moments dans un fonctionnement d'étalonnage,
   - dans lequel, en fonctionnement normal, par ajustement d'une position d'élément de réglage (p1 à p4) d'un élément de réglage (10 à 14) de la cage de laminoir respective (1 à 4), des cylindres de travail (10) de la cage de laminoir respective (1 à 4) sont ajustés à une emprise de laminage (s1 à s4) de telle sorte que les cylindres de travail (10) laminent la bande métallique (5),
   - dans lequel, pour la détermination de la position d'élément de réglage à ajuster (p1 à p4), une valeur d'étalonnage (sC1 à sC4) de la cage de laminoir respective (1 à 4), des paramètres d'état supplémentaires (P1 à P4) de la cage de laminoir respective (1 à 4) et une emprise de laminage théorique à ajuster (s1* à s4*) sont spécifiés à un modèle (15) décrivant la cage de laminoir respective (1 à 4), et le modèle (15) détermine à l'aide de la valeur d'étalonnage (sC1 à sC4), des paramètres d'état supplémentaires (P1 à P4) et de l'emprise de laminage théorique (s1* à s4*) la position d'élément de réglage à ajuster (p1 à p4),
   - dans lequel, en fonctionnement d'étalonnage, la valeur d'étalonnage de la cage de laminoir respective (1 à 4) est déterminée et passe ensuite du fonctionnement d'étalonnage au fonctionnement normal et
   - dans lequel, en fonctionnement normal, pour la détermination de la position d'élément de réglage à ajuster (p1 à p4), la valeur d'étalonnage (sC1 à sC4) déterminée en fonctionnement d'étalonnage est utilisée en tant que valeur d'étalonnage (sC1 à sC4) de la cage de laminoir respective (1 à 4),

   **caractérisé**

   - **en ce que**, en fonctionnement d'étalonnage, la position d'élément de réglage (p1 à p4) est tout d'abord ajustée de telle sorte que la bande métallique (5) traverse la cage de laminoir (1 à 4) sans être laminée par les cylindres de travail (10),
   - **en ce qu'**ensuite, en fonctionnement d'étalonnage, la position d'élément de réglage (p1 à p4) est amenée à varier de telle sorte que les cylindres de travail (10) laminent la bande métallique (5),
   - **en ce que**, en fonctionnement d'étalonnage, une épaisseur (d) de la bande métallique (5) avec laquelle la bande métallique (5) sort de la cage de laminoir respective (1 à 4) est détectée au moyen d'un dispositif de mesure d'épaisseur (9) disposé en aval de la cage de laminoir respective (1 à 4), et
   - **en ce que** l'épaisseur (d), les paramètres d'état supplémentaires (P1 à P4) et la position d'élément de réglage (p1 à p4) sont amenés au modèle (15) et le modèle (15) détermine à l'aide de l'épaisseur (d), des paramètres d'état supplémentaires (P1 à P4) et de la position d'élément de réglage (p1 à p4) la valeur d'étalonnage (sC1 à sC4) de la cage de laminoir respective (4).

2. Procédé de fonctionnement selon la revendication 1,
   **caractérisé**
   **en ce que** soit aucune cage de laminoir supplémentaire n'est disposée entre la cage de laminoir respective (4) et le dispositif de mesure d'épaisseur (9), soit au moins une cage de laminoir supplémentaire (2 à 4) est disposée entre la cage de laminoir respective (1 à 3) et le dispositif de mesure d'épaisseur (9), la position d'élément de réglage respective (p2 à p4) est ajustée pendant le fonctionnement d'étalonnage de la cage de laminoir respective (1 à 3) comme pour toutes les cages de laminoir supplémentaires (2 à 4) de telle sorte que la bande métallique (5) traverse la cage de laminoir supplémentaire respective (2 à 4) sans être laminée par des cylindres de travail (10) de la cage de laminoir supplémentaire respective (2 à 4).

3. Procédé de fonctionnement selon la revendication 1 ou la revendication 2,
   **caractérisé**
   **en ce que** le train de laminoir comprend un excitateur (17) qui est disposé en aval de la cage de laminoir respective (1 à 4) et en ce que l'excitateur (17) soumet la bande métallique (5) en fonctionnement d'étalonnage de la cage de laminoir respective (1 à 4) à une traction définie (Z) du côté sortie de la cage de laminoir respective (1 à 4).

4. Procédé de fonctionnement selon la revendication 3,
   **caractérisé**
   **en ce que** l'excitateur (17) est disposé derrière la dernière cage de laminoir (4) du train de laminoir.

**5.** Procédé de fonctionnement selon l'une des revendications précédentes, **caractérisé en ce que** le train de laminoir comprend un releveur de boucle (18 à 20) disposé en amont de la cage de laminoir respective (2 à 4) et en ce que le releveur de boucle (18 à 20) disposé en amont de la cage de laminoir respective (2 à 4) est maintenu en fonctionnement d'étalonnage dans une position en hauteur définie.

**6.** Procédé de fonctionnement selon l'une des revendications précédentes, **caractérisé en ce que** le train de laminoir comprend un releveur de boucle (18 à 20) disposé en aval de la cage de laminoir respective (1 à 3) et en ce que le releveur de boucle (18 à 20) disposé en aval de la cage de laminoir respective (1 à 3) est maintenu en fonctionnement d'étalonnage dans une position en hauteur définie.

**7.** Procédé de fonctionnement selon l'une des revendications précédentes, **caractérisé en ce qu'**au moins une autre cage de laminoir (1 à 3) est disposée en amont de la cage de laminoir respective (2 à 4) et en ce que, à partir du moment où l'on commence par la variation de la position d'élément de réglage (p2 à p4) de l'élément de réglage (12 à 14) de la cage de laminoir respective (2 à 4), jusqu'au moment où l'on passe du fonctionnement d'étalonnage au fonctionnement normal par rapport à la cage de laminoir respective (2 à 4), un patron de réduction selon lequel les autres cages de laminoir (1 à 3) sont mises en fonctionnement demeure inchangé.

**8.** Procédé de fonctionnement selon la revendication 7, **caractérisé en ce qu'**après le moment où l'on passe du fonctionnement d'étalonnage au fonctionnement normal par rapport à la cage de laminoir respective (2 à 4), un patron de réduction selon lequel la cage de laminoir respective (2 à 4) et les autres cages de laminoir (1 à 3) sont mises en fonctionnement est modifié.

**9.** Programme informatique pour un dispositif de commande (6) d'un train de laminoir avec plusieurs cages de laminoir (1 à 4) pour le laminage d'une bande métallique (5), le programme informatique comportant un code machine (8) qui est exécutable directement par le dispositif de commande (6), dans lequel l'exécution du code machine (8) par le dispositif de commande (6) a pour effet que le dispositif de commande (6) fait fonctionner le train de laminoir selon un procédé de fonctionnement selon l'une des revendications précédentes.

**10.** Dispositif de commande d'un train de laminoir avec plusieurs cages de laminoir (1 à 4) pour le laminage d'une bande métallique (5), le dispositif de commande étant conçu de telle sorte que le train de laminoir fonctionne selon un procédé de fonctionnement selon l'une des revendications 1 à 8.

**11.** Train de laminoir avec plusieurs cages de laminoir (1 à 4) pour le laminage d'une bande métallique (5) et avec un dispositif de commande (6) selon la revendication 10, le train de laminoir étant commandé par le dispositif de commande (6).

FIG 1

FIG 2

d0 | 10 | d1 < d0 | 10 | d2 < d1 | 10 | d3 < d2 | 10 | d4 < d3 | d / 9

1 10   2 10   3 10   Z   4 10

FIG 3

15

sC4 →
P4 →
s4* →

→ p4

FIG 4

d0 | 10 | d1 < d0 | 10 | d2 < d1 | 10 | d3 < d2 | 10 | d4 = d3

1 10   2 10   3 10   4 10   17

FIG 5

d0 | d1<d0 | d2<d1 | d3<d2 | d4=d3

10  10  10  10

1  10  2  10  3  10  4  10  17

FIG 6

d0 | d1<d0 | d2<d1 | d3<d2 | d4<d3

10  10  10  10

1  10  2  10  3  10  4  10  17

FIG 7

d
P4        15        sC4
p4

## FIG 8

## FIG 9

## FIG 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2110419 A1
- EP 2431104 A1
- WO 2011124585 A1
- WO 2004004938 A1
- JP S59070412 A
- US 20110099783 A1